# EUROPEAN PATENT SPECIFICATION

(11) **EP 1 441 004 B1**
(45) Date of publication and mention of the grant of the patent: **13.08.2008**
(21) Application number: 04290198.3
(22) Date of filing: 26.01.2004
(51) Int. Cl.: C08K 5/5425, C08K 5/14

(54) **Halogen-free flame-retardant resin composition**
Halogenfreie flammengeschützte Harzzusammensetzung
Composition de résine ignifuge non halogénée

(30) Priority: 27.01.2003 JP 2003017664
(43) Date of publication of application: 28.07.2004
(73) Proprietor: Shin-Etsu Chemical Co., Ltd., Chiyoda-ku, Tokyo (JP); Nagano Sanyo Kasei Company Ltd., Chiisagata-gun, Nagano-ken (JP)
(72) Inventor: Ihara, Toshiaki, Shin-Etsu Chemical Co., Ltd, Usui-gun, Gunma-ken (JP); Tanaka, Masaki, Shin-Etsu Chemical Co., Ltd, Chiyoda-ku, Tokyo (JP); Miyazawa, Hirotaka, Nagano Sanyo Kasei Co., Ltd, Chiisagata, Nagano-ken (JP); Hoshino, Susumu, Nagano Sanyo Kasei Co., Ltd, Chiisagata, Nagano-ken (JP); Hashimoto, Takaaki, Nagano Sanyo Kasei Co., Ltd, Chiisagata, Nagano-ken (JP)
(74) Representative: Peaucelle, Chantal

(56) References cited:
- EP-A- 1 059 330
- EP-A- 1 188 794
- EP-A- 1 258 507
- US-A- 4 550 056

## Description

The present invention relates to a novel flame-retardant thermoplastic resin composition exhibiting high flame retardancy and, nevertheless, having good flexibility and capable of giving a touch feeling of smoothness without generation of a halogen-containing noxious gas by combustion to be freed from the problem of environmental safety.

Since thermoplastic resins in general excepting certain halogen-containing resins have high inflammability, various proposals have been made heretofore to impart a thermoplastic resin with flame retardancy so as to be suitable for applications in which flame retardancy of the resin composition is essential. Most of these prior art methods propose a flame-retardant formulation including admixture of the resin composition with a flame-retardant agent which is a combination of a compound containing halogen, e.g., bromine, as a flame-retardant agent. Such a halogen-containing flame-retardant agent exhibits excellent effect of flame retardancy by the mechanism of free-radical trapping activity and evolution of non-inflammable gases by combustion of the composition. This prior art technology, however, involves a serious environmental or safety problem because the decomposition gases generated in a large volume from the halogen-containing flame-retardant agent usually have toxicity against human body so that it is eagerly desired to develop a flame-retardant thermoplastic resin composition without formulation of a halogen-containing flame-retardant agent still exhibiting high flame retardancy.

On the other hand, it is in recent years that various proposals are made to impart flame retardancy to a polyolefin resin as a material of insulators on electric wires and cables or as a material of resin sheets by compounding the resin composition with a metal hydroxide such as magnesium hydroxide powder. Metal hydroxides in general have advantages in respects of no or little toxicity against human body, small volumes of smoke evolution by combustion and low corrosiveness. Since the flame retardancy accomplished with a metal hydroxide depends on the evolution of water vapour released from the water of crystallization by combustion, the flame retardancy accomplished therewith is relatively low. For example, the oxygen-consumption index of a low-density polyethylene resin can be decreased only to about 25 even by compounding 100 parts by weight of the resin with 100 parts by weight of a metal hydroxide. Although certain improvements can be obtained in this regard by compounding the resin with a metal hydroxide powder after a surface treatment with a polyolefin resin and a silicone compound in combination, the improvement obtained thereby is still far from sufficiency. See Japanese Patents 2825500, 3019225 and 3072746 and Japanese Patent Publication 7-119324 for the use of a surface-treated metal hydroxide and Japanese Patents 3051211 and 3063759 for the combined use of a metal hydroxide and an organopolysiloxane. Further, see Japanese Patent Kokai 2003-128939 for the admixture of a thermoplastic resin with a metal hydroxide, dimethylpolysiloxane of a high degree of polymerization and vinyl group-containing organopolysiloxane of oily consistency in combination, the flame retardancy obtained therewith being higher than with a noble metal catalyst.

It is the present status of the technology for flame-retardant resin compositions that, although the electric wire-insulating resin composition capable of passing an evaluation test VW-1 of flame retardancy corresponding to UL 758VW-1 of the UL Standard can be obtained by compounding 100 parts by weight of a thermoplastic resin with 200 parts by weight of a metal hydroxide, such a high-loaded resin composition suffers an unduly high hardness of 90 or higher by a testing method corresponding to ISO 868, Type A, so that the resin composition is disadvantageous due to a possible damage on the surface coming into contact therewith. For example, EP-A- 1 188 794 discloses a flame-retardant non-halogen resin composition having a specific gravity not exceeding 1.14 and an oxygen index of 24 or higher and containing 1% by mass or less of heavy metals comprising 100 parts by mass of a polyolefin resin, 5 to 50 parts by mass of a hydrous inorganic compound and 1 to 55 parts by mass of a flame retardant aid having a density not exceeding 1.5 g/c.c and capable of exhibiting one or both of the behaviour including formation of a shell-like heat-insulation layer and enclosure of water vapour by foaming on combustion.

The present invention, accordingly, has an object to provide a flame-retardant thermoplastic resin composition free from any halogen-containing flame-retardant agents still exhibiting high flame retardancy and good flexibility and adequate hardness and capable of giving a touch feeling of smoothness so as to be freed from generation of toxic halogen-containing combustion gases without any safety problem against environment.

Thus, the present invention provides a novel and improved non-halogen flame-retardant thermoplastic resin composition which comprises:
(A) 100 parts by mass of a thermoplastic resin;
(B) from 40 to 300 parts by mass of an inorganic flame-retardant agent;
(C) from 0.1 to 50 parts by mass of an organopolysiloxane of a high degree of polymerization having a structure represented by the formula (1) below

   R¹₃Si-O-(-SiR¹₂-O-)ₙ-SiR¹₃, (1)

   in which the subscript n is an average number in the range from 2200 to 4000 and each R¹ is, independently from the others, a substituent group selected from the group consisting of a hydroxyl group and unsubstituted or substituted monovalent hydrocarbon groups free from aliphatic unsaturation and free from halogen;
(D) from 0.01 to 10 parts by mass of an organopolysiloxane compound having aliphatically unsaturated substituent groups in the molecular structure free from halogen represented by the average unit formula (2)

   R¹ₐR²_{b}SiO_{(4-a-b)/2}, (2)

   in which the subscript a is a 0 or a positive number not exceeding 3, the subscript b is a positive number not exceeding 3 with the proviso that a+b is in the range of 1 to 3, R¹ is a hydroxyl group or an unsubstituted or substituted monovalent hydrocarbon group free from aliphatic unsaturation and R² is a monovalent organic group having aliphatic unsaturation; and
(E) from 0.01 to 5 parts by mass of an organic peroxide.

It is further optional according to need that the above described inventive resin composition comprises (F) a catalytic ingredient of a platinum-group element in an amount in the range from 1 ppm to 5000 ppm by weight as calculated for the platinum-group element based on the total amount of the components (C) and (D). The inventive resin composition is particularly useful as a material of an insulating layer on electric wires because the insulating layer of the resin composition should have a low hardness not exceeding 85A to give a touch feeling of smoothness still exhibiting excellent flame retardancy to pass the test of VW-1.

Among the essential components (A) to (E) comprised in the inventive resin composition, the component (A) is a thermoplastic resin, in particular, containing no halogen, exemplified by low-density polyethylenes, high-density polyethylenes, straightly-linear low-density polyethylenes, ultralow-density polyethylenes, ultrahigh-molecular polyethylenes, polypropylenes, polypropylene-based elastomers, polystyrenes, polystyrene-based elastomers, ABS resins, ethylene-vinyl acetate copolymeric resins, saponified ethylene-vinyl acetate copolymeric resins such as ethylene-vinyl alcohol copolymers, ethylene-ethyl acrylate copolymeric resins, ethylene-acrylic acid copolymeric resins, ethylene-methyl acrylate copolymeric resins, ethylene-acrylamide copolymeric resins, ethylene-methacrylamide copolymeric resins, ethylene-methyl methacrylate copolymeric resins, ethylene-glycidyl methacrylate copolymeric resins, ethylene-maleic anhydride copolymeric resins, various kinds of thermoplastic elastomers such as ionomers, ethylene-propylene copolymeric rubbers, butyl rubbers, SBRs, NBRs, acrylic rubbers, silicone rubbers and the like either alone or in combination of two kinds or more according to need, though not particularly limitative thereto. Particularly remarkable advantageous results can be accomplished when the resin composition is compounded with a polyolefin resin or a polyolefin-based copolymeric resin as the component (A).

The component (B) comprised in the inventive resin composition is an inorganic flame-retardant agent known in the art including metal hydroxides such as aluminum hydroxide, magnesium hydroxide and calcium hydroxide, antimony trioxide, antimony tetroxide, antimony pentoxide, sodium antimonate, zinc borate, zirconium compounds, molybdenum compounds, calcium carbonate, silica, talc, titanium dioxide, pyrophyllite, quartz, diatomaceous earth, sulfide ores, calcined sulfide ores, graphite, bentonite, kaolinite, active carbon, carbon black, zinc oxide, iron oxides, marble stone, portland cement, boron nitride, natural and synthetic micas, glass beads, cerisite and others each in the form of a fine powder, though not particularly limited thereto. Among the above-named inorganic flame-retardant agents, metal hydroxides are preferred and aluminum hydroxide, magnesium hydroxide and calcium hydroxide are more preferred as the component (B) in the inventive resin composition.

The compounding amount of the above described component (B) in the inventive resin composition is in the range from 40 to 300 parts by weight or, preferably, from 50 to 150 parts by weight per 100 parts by weight of the component (A). When the amount of the component (B) is too small, no sufficient flame-retarding effect can be obtained while, when the amount thereof is too large, articles shaped by molding of the resin composition suffer an unduly increased hardness.

It is optional but preferable that a part of the powder of the above-described inorganic flame-retardant agent is surface-treated beforehand with an organosilane compound having an unsaturated group in the molecule which eventually forms crosslinks by the reaction between the unsaturated groups thereof or with the thermoplastic resin as the component (A) or with the unsaturated groups in the component (D) as induced by the organic peroxide as the component (E) to increase the mechanical strength of the articles shaped from the resin composition. The organosilane compounds suitable for this surface treatment is exemplified by vinyl triethoxysilane, vinyl trimethoxysilane, vinyl tris(2-methoxyethyloxy) silane and 3-methacryloxypropyl trimethoxysilane. The amount of the organosilane compound for the surface treatment of the inorganic flame-retardant powder is in the range from 0.001 to 5% by weight or, preferably, from 0.01 to 3% by weight relative to the flame-retardant powder. The component (B) should preferably be a combination of a portion of the powder surface-treated with the aforementioned unsaturation-functional silane compound and the remaining portion of the powder without surface treatment or with surface treatment with one of other known surface-treatment agents in a weight proportion of, for example, 0.5:99.5 to 100:0 or, more preferably, 20:80 to 95:5.

The component (C) compounded in the inventive resin composition is represented by the general formula

R¹₃Si-O-(-SiR¹-O⁻)ₙ-SiR¹₃, (1)

in which the subscript n is a positive number of 2200 to 4000 or, preferably, 2500 to 3500 as an average to give an average degree of polymerization and R¹ is a hydroxyl group or an unsubstituted or substituted monovalent hydrocarbon group having 1 to 6 carbon atoms excepting aliphatically unsaturated groups. This diorganopolysiloxane has oily or gum-like consistency depending on the value of the subscript n. When the value of n is too small, the resin composition cannot be imparted with high flame retardancy as desired while, when the value of n is too large, difficulties are encountered in compounding the ingredients due to unduly high consistency of the component (C).

The group denoted by R¹ in the above-given general formula (I) is exemplified by alkyl groups such as methyl, ethyl, propyl and butyl groups, cycloalkyl groups such as cyclohexyl group and aryl groups such as phenyl group as well as those substituted hydrocarbon groups obtained by replacing a part or all of the hydrogen atoms in the above-named hydrocarbon groups with cyano groups and others such as 2-cyanoethyl group. It is preferable that at least 80% in number of the groups denoted by R¹ in the component (C) are methyl groups.

The compounding amount of the component (C) in the inventive resin composition is in the range from 0.1 to 50 parts by weight or, preferably, from 1 to 20 parts by weight or, more preferably, from 2 to 15 parts by weight per 100 parts by weight of the thermoplastic resin as the component (A). When the amount of the component (C) is too small, the resin composition cannot be imparted with high flame retardancy as desired while, when the amount thereof is too large, an adverse influence is caused on the mechanical properties such as tensile strength and ultimate elongation of articles shaped from the resin composition. It is of course optional that the component (C) is a combination of two kinds or more of different diorganopolysiloxanes each falling within the definition of the component (C).

The component (D) compounded in the inventive resin composition is represented by the average unit formula

R¹ₐR²_{b}SiO_{(4-a-b)/2}, (2)

in which R² is an aliphatically unsaturated monovalent organic group including alkenyl groups having 2 to 8 carbon atoms and (meth)acryloyl-containing groups exemplified by vinyl, allyl, hexenyl, 3-(meth)acryloylpropyl, acryloylmethyl and vinyloxy groups, of which a vinyl group is particularly preferred in respect of the good reactivity. The molecular structure of the organopolysiloxane as the component (D) can be any one of straightly linear, branched and cyclic structures. While the requirement by the definition of the average unit formula (II) is that the molecule of the component (D) has at least one unsaturated group, it is preferable that at least 2% by moles of the groups denoted by R¹ and R² are the unsaturation-containing groups denoted by R².

Although the viscosity of the organopolysiloxane as the component (D) can be as high as 100000 mPa · s at 25°C, it is preferable that the viscosity thereof at 25 °C does not exceed 10000 mPa · s or, more preferably, does not exceed 500 mPa · s.

The weight proportion of the compounding amounts of the two organopolysiloxane ingredients, i.e. components (C) and (D), in the inventive resin composition should be in the range from 6:4 to 9:1 in order to obtain excellent flame retardancy of the resin composition.

The mechanism leading to exhibition of excellent flame retardancy by the formulation with these two organopolysiloxanes in combination is not clear enough but it is presumably as follows. Namely, the high-polymeric organopolysiloxane as the component (C) contributes to the improvement of dispersibility of the particles of the inorganic flame-retardant agent as the component (B) in the matrix of the resin composition so that the spaces between inorganic particles are filled up with a siliceous material formed by combustion of the resin composition leading to enhanced flame retardancy. On the other hand, the unsaturated group-containing organopolysiloxane as the component (D), which can rapidly migrate to the surface layer by virtue of its low molecular weight, causes intermolecular crosslinking on the surface of the composition under burning to form a flame-resistant surface film having tenacity thereby to enhance the flame retardancy of the composition.

The compounding amount of the unsaturated group-containing organopolysiloxane as the component (D) in the inventive resin composition is preferably in the range from 0.01 to 10 parts by weight or, more preferably, from 0.5 to 2 parts by weight per 100 parts by weight of the thermoplastic resin as the component (A). When the amount of the component (D) is too small, the density of the crosslinks formed by the reaction of the unsaturated groups is so low that a surface film having sufficient tenacity cannot be formed thereby. When the amount of the component (D) is too large, on the other hand, no sufficient distribution thereof can be accomplished in the resinous matrix due to slipperiness because the component (D) is an oily material.

Admixture of an organopolysiloxane to the inventive resin composition has an effect to decrease the glass transition point Tg of the composition so that the rigidity of the composition is decreased. The resin composition is imparted with further increased flame retardancy by the formation of a strongly networked flame-retardant surface film as a result of crosslink formation in the thermoplastic resin by an organic peroxide or crosslinking of metal hydroxide particles as the component (B) and the unsaturated group-containing organopolysiloxane. By virtue of the synergism of these various effects, the inventive resin composition can exhibit excellent flame retardancy if the hardness of the composition is as low as 85 or lower.

The component (E) compounded in the inventive resin composition is an organic peroxide which is exemplified by dicumyl peroxide, *tert*-butylperoxy-2-ethylhexanoate, 2,5-dimethyl-2,5-di(benzoylperoxy) hexane, *tert*-hexylperoxy benzoate, 1,1-bis(*tert*-butylperoxy) 3,3,5-trimethylcyclohexane, 1,1-bis(*tert*-hexylperoxy) cyclohexane, 1,1-bis(*tert* hexylperoxy-3,3,5-trimethylcyclohexane, 1,1-bis(*tert*-butylperoxy) cyclohexane, 1,1-bis(*tert*-butylperoxy) cyclododecane, n-butyl-4,4-bis(*tert*-butylperoxy) valerate, 2,5-dimethyl-2,5-di(*tert*-butylperoxy) hexane, α, α'-bis(*tert*-butylperoxy) diisopropylbenzene, *tert*-butylcumyl peroxide, di-*tert*-butylperoxide, 2,5-dimethyl-2,5-di(*tert*-butylperoxy) hexyne-3, *tert*-butyl hydroperoxide, 1,1,3,3-tetramethyl-butylperoxy-2-ethylhexanoate, dibenzoyl peroxide, *tert*-butylperoxy acetate and the like, though not particularly limitative thereto.

Among the above described various organic peroxides, peroxyketal compounds and dialkyl peroxide compounds are particularly preferable as the component (E) in respect of the large amount of free radicals generated therefrom. It is important that selection of the organic peroxide as the component (E) is made in consideration of the temperature corresponding to the 10-hours half-period of the peroxide relative to the temperature in the processing works of the resin composition. The processing temperature, which naturally depends on the types of the thermoplastic resin, is usually from 80 to 250 °C when the thermoplastic resin is a polyolefin resin. The compounding amount of the organic peroxide as the component (E) in the inventive resin composition is preferably in the range from 0.01 to 5 parts by weight per 100 parts by weight of the component (A).

Though optional, the inventive resin composition can be imparted with further improved flame retardancy by the admixture of a catalytic amount of a platinum-group element or compound thereof having catalytic activity as the component (F). The component (F) is preferably a compound of platinum, palladium or rhodium. It is preferable that the component (F) is a complex compound of the metallic element rather than an elementary form of the metal. Examples of the catalytic ingredient of a platinum-group element, e.g., platinum, rhodium and palladium, suitable here as the component (F) include platinum black, chloroplatinic acid, chloroplatinic acid-olefin complexes, chloroplatinic acid-alcohol coordination compounds, elementary rhodium, rhodium-olefin complexes and others, of which complexes of the platinum-group element are preferable to the elementary forms and complexes modified with an organosiloxane or an alcohol are more preferable. To give more particular examples, the catalytic ingredient as the component (F) should be selected from chloroplatinic acid, alcohol solutions of chloroplatinic acid, reaction products of chloroplatinic acid and an alcohol, reaction products of chloroplatinic acid and an olefin compound, reaction products of chloroplatinic acid and a vinyl group-containing organosiloxane compound and the like.

The compounding amount of the above-described catalytic ingredient as the component (F) is, when incorporated as an optional additive, in the range from 1 to 5000 ppm by weight based on the total amount of the components (C) and (D) as calculated for the platinum group element. When the amount thereof is too small, improvements can hardly be expected in the flame retardancy of the inventive resin composition while no further improvements can be obtained by increasing the amount to exceed the aforementioned upper limit rather with an economical disadvantage due to the expensiveness of the platinum group metal materials in general.

Besides the above-described optional component (F), the inventive flame-retardant resin composition can be admixed with a variety of known additives according to need each in a limited amount not to adversely affect the inherent properties of the inventive resin composition. Such optional additives include antioxidants, ultraviolet absorbers, stabilizers, photostabilizers, compatibilizing agents, other known flame-retardant agents free from halogen, lubricants, fillers, adhesion aids and rust proofers, though not limited thereto.

Examples of the aforementioned antioxidants usable here include 2,6-di-*tert*-butyl-4-methylphenol, n-octadecyl-3-(3',5'-di-*tert*-butyl-4-hydroxyphenyl) propionate, tetrakis[methylene-3-(3,5-di-*tert*-butyl-4-hydroxyphenyl)propionato]methane, tris(3,5-di-*tert*-butyl-4-hydroxybenzyl) isocyanurate, 4,4'-butylidenebis-(3-methyl-6-*tert*-butylphenol), triethyleneglycol-bis[3-(3-*tert*-butyl-4-hydroxy-5-methylphenyl) propionate], 3,9-bis(2-[3-(3-*tert*-butyl-4-hydroxy-5-methylphenyl)propionyloxy]-1,1-dimethylethyl)-2,4,8,10-tetraoxaspiro[5,5]undecane, 4,4-thiobis-(2-*tert*-butyl-5-methylphenol), 2,2-methylenebis-(6-*tert*-butyl-methylphenol), 4,4-methylenebis-(2,6-di*-tert*-butylphenol), 1,3,5-trimethyl-2,4,6-tris(3,5-di-*tert*-butyl-4-hydroxybenzyl)benzene, trisnonylphenyl phosphite, tris(2,4-di-*tert*-butylphenyl) phosphite, distearylpentaerythritol phosphite, bis(2,4-di-*tert*-butylphenyl)pentaerythritol phosphite, bis(2,6-di-*tert*-butylphenyl)pentaerythritol phosphite, 2,2-methylenebis (4,6-di- *tert*-butylphenyl)octyl phosphite, tetrakis (2,4-di-*tert*-butyl phenyl) -4,4'-biphenylene-diphosphonite, dilauryl-3,3'-thiodipropionate, dimyristyl-3,3'-thiodipropionate, dimyristyl-3,3'-thiodipropionate, pentaerythritol tetrakis(3-laurylthiopropionate), 2,5,7,8-tetramethyl-2-(4,8,12-trimethyldecyl)chroman-2-ol, 5,7-di-*tert*-butyl-3-(3,4-dimethylphenyl-3H-benzofuran-2-one, 2-[1-(2-hydroxy-3,5-di-*tert*-pentylphenyl)ethyl]-4,6-dipentylphenyl acrylate, 2-[1-(2-hydroxy-3,5-di-*tert*-pentylphenyl)ethyl]-4,6-dipentylphenyl acrylate, 2-*tert*-butyl-6-(3-*tert*-butyl-2-hydroxy-5-methylbenzyl)-4-methylphenol acrylate, tetrakis(methylene)-3-(dodecylthio propionato)methane and the like.

The aforementioned stabilizers usable as an optional additive in the inventive resin composition include metal soaps such as lithium stearate, magnesium stearate, calcium laurate, calcium ricinoleate, calcium stearate, barium laurate, barium ricinoleate, barium stearate, zinc laurate, zinc ricinoleate and zinc stearate, laurate-based, ricinoleate-based and maleate-based organic tin compounds, lead compounds such as lead stearate and tribasic lead sulphate, epoxy compounds such as epoxidated plant oils, phosphite compounds such as alkylaryl phosphites and trialkyl phosphites, β -diketone compounds such as dibenzoylmethane and dehydroacetic acid, polyol compounds such as sorbitol, mannitol and pentaerythritol, hydrotalcite compounds and zeolites.

The aforementioned photostabilizers or ultraviolet absorbers usable in the inventive resin composition include benzotriazole compounds, benzophenone compounds, salicylate compounds, cyanoacrylate compounds, oxalic acid anilide compounds and hindered amine compounds.

The aforementioned compatibilizing agents usable in the inventive resin composition include acrylic-organopolysiloxane copolymers, partially crosslinked materials between silica and an organopolysiloxane, silicone resin powders, so-called MQ resin powders, polyolefin resins graft-modified with maleic anhydride, polyolefin resins graft-modified with a carboxylic acid and organopolysiloxanes graft-modified with a polyolefin. The aforementioned adhesion aid is exemplified by alkoxysilane compounds.

The aforementioned known flame-retardant agents used as an auxiliary free from halogen for use with an object to further improve the flame retardancy of the inventive resin composition include zinc borate, zinc stannate, phosphorus-based compounds, expandable graphite, melamine cyanurates, guanidine sulfamate and photocatalytic titanium dioxide. The fillers usable include silicic acid, calcium carbonate, titanium dioxide, carbon black, kaolin clay, calcined clay, aluminium silicate, magnesium silicate, calcium silicate and baryta.

In the preparation of the inventive halogen-free flame-retardant thermoplastic resin composition, the thermoplastic resin as the component (A) is admixed and blended at an elevated temperature with the other essential ingredients, i.e. components (B) to (E), and optional additives each in a specified amount and kneaded together in a suitable resin-processing machine such as double-screw extruders, single-screw extruders, Banbury mixers and pressurizable kneaders. It is a more convenient and more efficient way in respect of the good dispersibility of the respective ingredients that an intermediate blend is prepared from the respective Ingredients excepting the component (A) and the intermediate blend is then admixed and blended with a specified amount of the component (A) to complete the composition. Alternatively, another intermediate blend is prepared from the respective ingredients excepting the component (B) and this intermediate blend is then admixed and blended with a specified amount of the component (B). The thus prepared halogen-free flame-retardant resin composition of the present invention is particularly satisfactory when used as a molding material of resin tubes and resin sheets of which excellent flame retardancy is essential.

In the following, the halogen-free flame-retardant thermoplastic resin composition of the present invention is described in more detail by way of Examples and Comparative Examples, which, however, never limit the scope of the invention in any way. In these experimental descriptions below, the term of "parts" always refers to "parts by weight".

### Example 1.

A resin composition was prepared by compounding 80 parts of an EVA resin (ingredient 1) and 20 parts of an EEA resin (ingredient 2) with 130 parts of a first-grade magnesium hydroxide powder (ingredient 3), 40 parts of a second-grade magnesium hydroxide powder (ingredient 4), 3 parts of a high-polymeric dimethylpolysiloxane (ingredient 5), 2 parts of a methylvinyl silicone oil (ingredient 6) and 0.6 part of an organic peroxide (Perhexa, ingredient 8) in a Laboplastomill (Model R250 Mixer, manufactured by Toyo Seiki Co.) running at 30 rpm at a temperature of 140 °C for 10 minutes.

This resin composition was pelletized by extrusion and the pellets were shaped by compression molding at 150 °C for 1 minute into a 1 mm thick sheet to serve as a test specimen, which had a hardness A of 84 by a testing procedure corresponding to ISO 868. Separately, an insulated electric wire for the VW-1 test of flame retardancy was prepared using the above-prepared resin pellets by forming a 0.8 mm thick insulating layer on and around a copper wire of 2 mm²-wide cross section. This insulated wire sample was subjected to evaluation of flame retardancy in a method corresponding to the UL 758 standard for VW-1 (vertical inflammability) test to find that the insulated wire sample passed the test.

### Example 2.

The experimental procedure was substantially the same as in Example 1 excepting for a decrease in the amount of the ingredient 3 from 130 to 90 parts and an additional admixture of 0.2 part of a platinum catalyst (CAT-PL-1, ingredient 9) corresponding to 0.004 part of the platinum element. The results of the evaluation tests were that the hardness A of the sheet sample was 80 and the insulated wire sample passed the flame retardancy test.

### Example 3.

The experimental procedure was substantially the same as in Example 2 excepting omission of the ingredient 4. The results of the evaluation tests were that the hardness A of the sheet sample was 84 and the insulated wire sample passed the flame retardancy test.

### Example 4.

The experimental procedure was substantially the same as in Example 2 excepting modifications of the amounts of the ingredients 3, 4 and 5 to 60 parts, 70 parts and 5 parts, respectively. The results of the evaluation tests were that the hardness A of the sheet sample was 78 and the insulated wire sample passed the flame retardancy test.

### Example 5.

The experimental procedure was substantially the same as in Example 2 excepting modifications of the amounts of the ingredients 3, 4, 5, 6 and 7 and the platinum catalyst (ingredient 9) to 150 parts, 100 parts, 50 parts, 10 parts, 1.0 part and 0.4 part (corresponding to 0.008 part of platinum element), respectively. The results of the evaluation tests were that the hardness A of the sheet sample was 85 and the insulated wire sample passed the flame retardancy test.

### Example 6.

The experimental procedure was substantially the same as in Example 1 excepting for a decrease in the amount of the ingredient 3 from 130 to 20 parts and an additional admixture of 0.2 part of the platinum catalyst (CAT-PL-1, ingredient 9) corresponding to 0.004 part of the platinum element. The results of the evaluation tests were that the hardness A of the sheet sample was 77 and the insulated wire sample passed the flame retardancy test.

### Comparative Example 1.

The experimental procedure was substantially the same as in Example 1 except that the resin composition was prepared from 80 parts, 20 parts and 200 parts of the ingredients 1, 2 and 3, respectively, the other ingredients being omitted. The results of the evaluation tests were that the hardness A of the sheet sample was 95 although the insulated wire sample passed the flame retardancy test.

### Comparative Example 2.

The experimental procedure was substantially the same as in Example 1 except that the resin composition was prepared from 80 parts, 20 parts and 170 parts of the ingredients 1, 2 and 3, respectively, the other ingredients being omitted. The results of the evaluation tests were that the hardness A of the sheet sample was 88 and the insulated wire sample failed to pass the flame retardancy test.

### Comparative Example 3.

The experimental procedure was substantially the same as in Example 2 except that the amounts of the ingredients 3, 5 and 6 were increased to 130 parts, 6 parts and 4 parts, respectively. The results of the evaluation tests were that the hardness A of the sheet sample was 82 but the insulated wire sample failed to pass the flame retardancy test.

### Comparative Example 4.

The experimental procedure was substantially the same as in Example 1 except that the resin composition was prepared from 80 parts, 20 parts and 170 parts of the ingredients 1, 2 and 4, respectively, the other ingredients being omitted. The results of the evaluation tests were that the hardness A of the sheet sample was 89 and the insulated wire sample failed to pass the flame retardancy test.

### Comparative Example 5.

The experimental procedure was substantially the same as in Comparative Example 1 excepting additional admixture of 10 parts of the ingredient 5. The results of the evaluation tests were that the hardness A of the sheet sample was 90 and the insulated wire sample failed to pass the flame retardancy test.

### Comparative Example 6.

The experimental procedure was substantially the same as in Comparative Example 1 excepting additional admixture of 10 parts of a dimethylpolysiloxane silicone oil (KF 96, a product by Shin-Etsu Chemical Co.) having a viscosity of 10⁶ mPa · s at 25 °C (ingredient 7). The results of the evaluation tests were that the hardness A of the sheet sample was 92 although the insulated wire sample could pass the flame retardancy test.

### Comparative Example 7.

The experimental procedure was substantially the same as in Example 1 except that the resin composition was prepared from 80 parts, 20 parts, 150 parts and 10 parts of the ingredients 1, 2, 3 and 5, respectively, the other ingredients being omitted. The results of the evaluation tests were that the hardness A of the sheet sample was 80 but the insulated wire sample failed to pass the flame retardancy test.

### Comparative Example 8.

The experimental procedure was substantially the same as in Example 6 excepting for the omission of the ingredient 6. The results of the evaluation tests were that, although the hardness A of the sheet sample was 78, the insulated wire sample failed to pass the flame retardancy test.

### Comparative Example 9.

The experimental procedure was substantially the same as in Example 6 excepting for the omission of the ingredient 5. The results of the evaluation tests were that, although the hardness A of the sheet sample was 80, the insulated wire sample failed to pass the flame retardancy test.

### Comparative Example 10.

The experimental procedure was substantially the same as in Example 6 excepting for the omission of the ingredient 8. The results of the evaluation tests were that, although the hardness A of the sheet sample was 75, the insulated wire sample failed to pass the flame retardancy test.

Following are characterizations of the various ingredients (1) to (9) formulated in the respective resin compositions prepared in the Examples and Comparative Examples described above.
Ingredient 1: ethylene-vinyl acetate copolymeric resin (EVA), Evaflex 40LX, a product by Mitsui DuPont Polychemical Co.
Ingredient 2: ethylene-ethyl acrylate copolymeric resin (EEA), PES 220, a product by Nippon Unicar Co.
Ingredient 3: magnesium hydroxide powder surface-treated with a methacryloxysilane, Finemag MO-E, a product by TMG Co.
Ingredient 4: magnesium hydroxide powder surface-treated with saturated fatty acid, Finemag MO-T, a product by TMG Co.
Ingredient 5: high-polymeric dimethylpolysiloxane of which a 30% by weight xylene solution had a solution viscosity of 30000 mPa · s at 25 °C corresponding to an estimated non-solvent viscosity of about 2.4 × 10⁶ mPa · s, a product by Shin-Etsu Chemical Co.
Ingredient 6: methylvinylpolysiloxane oil having a viscosity of 700 mPa · s at 25 °C, of which the content of vinyl groups relative to overall substituent groups was 10% by moles, a product by Shin-Etsu Chemical Co.
Ingredient 7: dimethylpolysiloxane oil having a viscosity of 1 × 10⁶ mPa · s at 25 °C, KF 96, a product by Shin-Etsu Chemical Co.
Ingredient 8: peroxyketal-type organic peroxide, Perhexa 3M, a product by Nippon Oil and Fat Co.
Ingredient 9: platinum complex composition containing 2% of platinum, CAT-PL-1, a product by Shin-Etsu Chemical Co.

A comparison made between Examples 1 to 5 and Comparative Examples 1, 2, 4 and 6 described above relative to the results of the evaluation tests for the hardness and flame retardancy of the respective resin compositions clearly indicates the advantages obtained with a formulation of the resin composition including all of the essential components (A) to (E) in combination. Further, it is understood from a comparison between Examples 1 to 5 and Comparative Examples 3, 5 and 7 that, if one or more of the essential components be omitted in the formulation of the resin composition, the advantages to be obtained according to the present invention can no longer be obtained. The same conclusions can be reached from a comparison between Example 6 and Comparative Examples 8-10. Thus, the present invention provides a halogen-free thermoplastic resin composition which exhibits excellent flame retardancy but is still capable of giving a touch feeling of softness and smoothness and free from the problems of safety and environmental pollution by virtue of absence of any halogen-containing noxious decomposition products in the combustion gas.

## Claims

1. A non-halogen flame-retardant resin composition which comprises:
(A) 100 parts by mass of a thermoplastic resin;
(B) from 40 to 300 parts by mass of an inorganic flame-retardant agent;
(C) from 0. 1 to 50 parts by mass of an organopolysiloxane of high degree of polymerization having a structure represented by the formula (1) below
R¹₃Si-O-(-SiR¹₂-O-)ₙ-SiR¹₃, (1)
in which the subscript n is an average number in the range from 2200 to 4000 and each R¹ is, independently from the others, a substituent group selected from the group consisting of a hydroxyl group and unsubstituted or substituted monovalent hydrocarbon groups free from aliphatic unsaturation and free from halogen
(D) from 0.01 to 10 parts by mass of an organopolysiloxane containing unsaturated functional groups and having a structure free from halogen represented by the average unit formula
R¹ₐR2_{b}SiO_{(4-a-b)/2}, (2)
in which the subscript a is 0 or a positive number not exceeding 3, the subscript b is a positive number not exceeding 3 with the proviso that a+b is in the range from 1 to 3, R¹ is a hydroxyl group or an unsubstituted or substituted monovalent hydrocarbon group free from aliphatic unsaturation and R² is a monovalent organic group having aliphatic unsaturation; and
(E) from 0.01 to 5 parts by mass of an organic peroxide.

2. The halogen-free flame-retardant resin composition according to claim 1 which further comprises;
(F) a catalytic ingredient containing a platinum-group element in an amount in the range from 1 to 5000 ppm by weight calculated for the platinum-group element based on the total amount of the components (C) and (D).

3. The halogen-free flame-retardant resin composition according to claim 1 in which the component (B) is a combination of a portion of an inorganic flame-retardant powder surface-treated with an organosilane compound having an aliphatically unsaturated group and the remaining portion of the inorganic flame-retardant powder without surface treatment with an organosilane compound having an aliphatically unsaturated group.

4. The halogen-free flame-retardant resin composition according to claim 3 in which the amount of the organosilane compound deposited on the surface of the surface-treated inorganic flame-retardant powder is in the range from 0.001 to 5% by weight based on the amount of the surface-treated inorganic flame-retardant powder.

5. The halogen-free flame-retardant resin composition according to claim 1 in which the organopolysiloxane compound as the component (D) has a viscosity not exceeding 10000 mPa **•** s at 25 °C.

6. The halogen-free flame-retardant resin composition according to Claim 1 in which the organopolysiloxane compound as the component (D) contains at least 2% by moles of the groups denoted by R² based on the overall content of the groups denoted by R¹ and R².

7. The halogen-free flame-retardant resin composition according to claim 1 in which the organic peroxide as the component (E) is a peroxyketal compound or a dialkyl peroxide compound.

8. The halogen-free flame-retardant resin composition according to claim 2 in which the platinum-group element in the component (F) is selected from the group consisting of platinum, palladium and rhodium.

9. The halogen-free flame-retardant resin composition according to claim 1 in which the thermoplastic resin as the component (A) is a polyolefin resin or an olefin-based copolymeric resin.

10. The halogen-free flame-retardant resin composition according to claim 1 in which the component (B) is a metal hydroxide.

11. The halogen-free flame-retardant resin composition according to claim 10 in which the metal hydroxide is magnesium hydroxide.

## Patentansprüche

1. Halogen-freie flammhemmende Harzzusammensetzung, welche:
(A) 100 Masseteile eines thermoplastischen Harzes;
(B) 40 bis 300 Masseteile eines anorganischen Flammhemmers;
(C) 0,1 bis 50 Masseteile eines Organopolysiloxans mit einem hohen Polymerisationsgrad mit einer Struktur, dargestellt durch die nachstehende Formel (1):
R¹₃Si-O-(-SiR¹₂-O-)ₙ-SiR¹₃ (1),
worin die Tiefzahl n eine durchschnittliche Zahl im Bereich von 2200 bis 4000 ist und jeder R¹ unabhängig voneinander eine Substituentengruppe ist, ausgewählt aus der Gruppe, bestehend aus einer Hydroxylgruppe und unsubstituierten oder substituierten einwertigen Kohlenwasserstoffgruppen, die frei von aliphatischer Ungesättigtheit und frei von Halogen sind;
(D) 0,01 bis 10 Masseteile eines Organopolysiloxans, das ungesättigte funktionelle Gruppen enthält und eine Struktur aufweist, die frei von Halogen ist, dargestellt durch die durchschnittliche Einheitsformel
R¹ₐR²_{b}SiO_{(4-a-b)/2}, (2),
worin die Tiefzahl a 0 oder eine positive Zahl, die 3 nicht übersteigt, ist, die Tiefzahl b eine positive Zahl, die 3 nicht übersteigt, ist, mit das Maßgabe, daß a + b im Bereich von 1 bis 3 liegt, R¹ eine Hydroxylgruppe oder eine unsubstituierte oder substituierte einwertige Kohlenwasserstoffgruppe, die frei von aliphatischer Ungesättigtheit ist, ist und R² eine einwertige organische Gruppe mit aliphatischer Ungesättigtheit ist; und
(E) 0,01 bis 5 Masseteile eines organischen Peroxids umfaßt.

2. Halogen-freie flammhemmende Harzzusammensetzung nach Anspruch 1, ferner umfassend:
(F) einen katalytischen Inhaltsstoff, enthaltend ein Platingruppe-Element in einer Menge im Bereich von 1 bis 5000 ppm, bezogen auf das Gewicht, berechnet für das Platingruppe-Element, basierend auf der Gesamtmenge der Komponenten (C) und (D).

3. Halogen-freie flammhemmende Harzzusammensetzung nach Anspruch 1, in der die Komponente (B) eine Kombination aus einem Teil eines anorganischen flammhemmenden Pulvers, das mit einer Organosilanverbindung mit einer aliphatischen ungesättigten Gruppe oberflächenbehandelt ist, und dem verbleibenden Teil des anorganischen flammhemmenden Pulvers ohne Oberflächenbehandlung mit einer Organosilanverbindung mit einer aliphatischen ungesättigten Gruppe ist.

4. Halogen-freie flammhemmende Harzzusammensetzung nach Anspruch 3, in der die Menge der Organosilanverbindung, die auf der Oberfläche des oberflächenbehandelten anorganischen flammhemmenden Pulvers abgeschieden ist, im Bereich von 0,001 bis 5 Gew.-% liegt, basierend auf der Menge des oberflächenbehandelten anorganischen flammhemmenden Pulvers.

5. Halogen-freie flammhemmende Harzzusammensetzung nach Anspruch 1, in der die Organopolysiloxanverbindung als die Komponente (D) eine Viskosität, die 10.000 mPa · s bei 25 °C nicht übersteigt, hat.

6. Halogen-freie flammhemmende Harzzusammensetzung nach Anspruch 1, in der die Organopolysiloxanverbindung als die Komponente (D) mindestens 2 mol-% der Gruppen, die mit R² bezeichnet sind, enthält, basierend auf dem Gesamtgehalt der Gruppen, die mit R¹ und R² bezeichnet sind.

7. Halogen-freie flammhemmende Harzzusammensetzung nach Anspruch 1, in der das organische Peroxid als die Komponente (E) eine Peroxyketalverbindung oder eine Dialkylperoxidverbindung ist.

8. Halogen-freie flammhemmende Harzzusammensetzung nach Anspruch 2, in der das Platingruppe-Element in Komponente (F) aus der Gruppe ausgewählt ist, bestehend aus Platin, Palladium und Rhodium.

9. Halogen-freie flammhemmende Harzzusammensetzung nach Anspruch 1, in der das thermoplastische Harz als die Komponente (A) ein Polyolefinharz oder ein Olefin-basierendes Copolymerharz ist.

10. Halogen-freie flammhemmende Harzzusammensetzung nach Anspruch 1, in der die Komponente (B) ein Metallhydroxid ist.

11. Halogen-freie flammhemmende Harzzusammensetzung nach Anspruch 10, in der das Metallhydroxid Magnesiumhydroxid ist.

## Revendications

1. Composition de résine ignifuge non halogénée, qui comprend :
(A) 100 parties en masse d'une résine thermoplastique ;
(B) 40 à 300 parties en masse d'un agent ignifuge inorganique ;
(C) 0,1 à 50 parties en masse d'un organopolysiloxane à haut degré de polymérisation ayant une structure représentée par la formule (1) ci-dessous
R¹₃Si-O-(-SiR¹₂-O-)ₙ-SiR¹₃, (1)
dans laquelle l'indice n représente un nombre moyen dans la gamme de 2 200 à 4 000 et chaque R¹ représente, indépendamment des autres, un groupe substituant choisi dans le groupe constitué par un groupe hydroxyle et des groupes hydrocarbonés monovalents non substitués ou substitués exempts d'insaturation aliphatique et exempts d'halogène ;
(D) 0,01 à 10 parties en masse d'un organopolysiloxane contenant des groupes fonctionnels insaturés et ayant une structure exempte d'halogène représentée par la formule unitaire moyenne
R¹ₐR²_{b}SiO_{(4-a-b)/2}, (2)
dans laquelle l'indice a vaut 0 ou représente un nombre positif ne dépassant pas 3, l'indice b représente un nombre positif inférieur ou égal à 3, à condition que a + b soit dans la gamme de 1 à 3, R¹ représente un groupe hydroxyle ou un groupe hydrocarboné monovalent non substitué ou substitué exempt d'insaturation aliphatique et R² représente un groupe organique monovalent à insaturation aliphatique ; et
(E) 0,01 à 5 parties en masse d'un peroxyde organique.

2. Composition de résine ignifuge sans halogène selon la revendication 1 qui comprend en outre ;
(F) un ingrédient catalytique contenant un élément du groupe du platine dans une quantité dans la gamme de 1 à 5 000 ppm en poids, calculée pour l'élément du groupe du platine par rapport à la quantité totale des composants (C) et (D).

3. Composition de résine ignifuge sans halogène selon la revendication 1 dans laquelle le composant (B) est une combinaison d'une portion d'une poudre ignifuge inorganique traitée en surface avec un composé organosilane ayant un groupe à insaturation aliphatique et la portion restante de la poudre ignifuge inorganique sans traitement de surface avec un composé organosilane ayant un groupe à insaturation aliphatique.

4. Composition de résine ignifuge sans halogène selon la revendication 3 dans laquelle la quantité de composé organosilane déposé sur la surface de la poudre ignifuge inorganique traitée en surface est dans la gamme allant de 0,001% à 5% en poids par rapport à la quantité de poudre ignifuge inorganique traitée en surface.

5. Composition de résine ignifuge sans halogène selon la revendication 1 dans laquelle le composé organopolysiloxane en tant que composant (D) a une viscosité ne dépassant pas 10 000 mPa • s à 25°C.

6. Composition de résine ignifuge sans halogène selon la revendication 1 dans laquelle le composé organopolysiloxane en tant que composant (D) contient au moins 2% en moles des groupes représentés par R² par rapport à la teneur globale des groupes représentés par R¹ et R².

7. Composition de résine ignifuge sans halogène selon la revendication 1 dans laquelle le peroxyde organique en tant que composant (E) est un composé de peroxycétal ou un composé de peroxyde de dialkyle.

8. Composition de résine ignifuge sans halogène selon la revendication 2 dans laquelle l'élément du groupe du platine du composant (F) est choisi dans le groupe constitué par le platine, le palladium et le rhodium.

9. Composition de résine ignifuge sans halogène selon la revendication 1 dans laquelle la résine thermoplastique en tant que composant (A) est une résine polyoléfinique ou une résine copolymère à base d'oléfine.

10. Composition de résine ignifuge sans halogène selon la revendication 1 dans laquelle le composant (B) est un hydroxyde métallique.

11. Composition de résine ignifuge sans halogène selon la revendication 10 dans laquelle l'hydroxyde métallique est l'hydroxyde de magnésium.
